# EUROPÄISCHE PATENTSCHRIFT

(11) **EP 0 811 536 B1**
(45) Veröffentlichungstag und Bekanntmachung des Hinweises auf die Patenterteilung: **30.01.2002**
(21) Anmeldenummer: 97108984.2
(22) Anmeldetag: 04.06.1997
(51) Int. Cl.: B60R 25/04, E05B 49/00

(54) **Authentififizierungseinrichtung mit Schlüsselzahlspeicher**
Authentication system with key memory
Système d'authentification avec mémoire de clef

(30) Priorität: 06.06.1996 DE 19622720
(43) Veröffentlichungstag der Anmeldung: 10.12.1997
(73) Patentinhaber: Delphi Automotive Systems Deutschland GmbH, D-42369 Wuppertal (DE)
(72) Erfinder: Konrad, Reimund, 51647 Gummersbach (DE); Petsching, Wilfried, 51688 Wipperfürth (DE); Weiss, Bernd, 51647 Gummersbach (DE)
(74) Vertreter: Cohausz & Florack

(56) Entgegenhaltungen:
- EP-A- 0 671 528
- EP-A- 0 695 675
- EP-A- 0 704 352
- DE-A- 4 435 894
- DE-C- 4 317 119
- PATENT ABSTRACTS OF JAPAN vol. 095, no. 007, 31. August 1995 & JP 07 091124 A (TOSHIBA CORP), 4. April 1995

## Beschreibung

Die Erfindung betrifft eine Vorrichtung zur Prüfung der Nutzungsberechtigung für Zugangskontrolleinrichtungen, insbesondere Schließeinrichtungen für Fahrzeuge gemäß dem Oberbegriff des Anspruchs 1.

Schließeinrichtungen für Fahrzeuge haben gerade in jüngster Zeit durch die drastische Zunahme von Fahrzeugdiebstählen an erheblicher Bedeutung gewonnen. Dabei werden im Zusammenhang mit sog. Keyless-Car-Systemen zunehmend Schlüsseleinrichtungen verwandt, die herkömmliche Fahrzeugschlüssel, die leicht manipulierbar sind, ersetzen sollen.

Moderne Schlüsseleinrichtungen erhalten als zentrales Element einen mit einem Chip gekoppelten Transponder, welcher bei elektromagnetischer Anregung eine Benutzercodeinformation, beispielsweise in Form einer Zahlenfolge, aussendet.

In der Steuereinrichtung wird dann verglichen, ob die vom Transponder in der Schlüsseleinrichtung ausgesandte Benutzercodeinformation auf einen authorisierten Benutzer schließen läßt oder nicht. Nur bei Identifizierung des authorisierten Benutzers gibt die Steuereinrichtung den Zugang zu den nachgeschalteten Komponenten des Fahrzeuges frei, während im anderen Fall der Zugang zum Betrieb des Fahrzeuges blockiert wird. Um den Besitzer der jeweiligen Schlüsseleinrichtung als authorisiert auszuweisen, wird in einem sog. "Anlernprozeß" der Schlüsseleinrichtung ein geheimer Code von der Steuereinrichtung übertragen. Nach dem Anlernen des kompletten Fahrzeugschlüsselsatzes, der dem Benutzer bei der Übernahme des Fahrzeuges übergeben wurde, ist jeder Schlüssel somit kennzeichnend für den authorisierten Fahrzeugbenutzer.

Solche Vorrichtungen gemäß dem Oberbegriff von Anspruch 1 sind beispielsweise aus der DE 4317119 C2 und der DE 4435894 A1 bekannt.

Im Zusammenhang mit Fahrzeugdiebstählen wurde ein Mißbrauch dahingehend beobachtet, daß über die rechtmäßig erhaltenen und angelernten Fahrzeugschlüssel hinaus weitere Schlüssel von der Steuereinrichtung des Fahrzeuges angelernt wurden. Im Falle eines vorgetäuschten Fahrzeugdiebstahls wurden der Versicherung zwar ein kompletter Schlüsselsatz übergeben. Dennoch kann das angeblich entwendete Fahrzeug mit den nachträglich angelernten Schlüsseln weiterbetrieben werden kann.

Der Erfindung liegt daher die Aufgabe zugrunde, eine Vorrichtung zur Prüfung der Nutzungsberechtigung für Zugangskontrolleinrichtungen, insbesondere Schließeinrichtungen für Fahrzeuge, dahingehend weiterzuentwickeln, daß der oben beschriebene Mißbrauch vermieden wird.

Die Erfindung zeichnet sich aus, durch eine Vorrichtung zur Prüfung der Nutzungsberechtigung für Zugangskontrolleinrichtungen, insbesondere Schließeinrichtungen für Fahrzeuge, die
- eine zugangsseitigen Steuereinrichtung mit einem Speichermittel für einen geheimen Code,
- eine Anzahl von benutzerseitigen Schlüsseleinrichtungen, die jeweils einen Transponder enthalten, in dem der für die jeweilige Schlüsseleinrichtung maßgebliche geheime Code niedergelegt ist und
- Vergleichsmittel in der Steuereinrichtung zur Feststellung der für die Freigabe der Zugangseinrichtung erforderlichen Berechtigung, derart, daß die vom jeweiligen Transponder ausgesandten Informationen jeweils mit einer in der Steuereinrichtung durch den geheimen Code festgelegten Vorgabeinformation verglichen werden,
umfaßt, wobei
(a) der für die jeweilige Schlüsseleinrichtung maßgebliche geheime Code durch Anlernen von der Steuereinrichtung niedergelegt ist,
(b) die vom jeweiligen Transponder ausgesandte Information, die von dem Vergleichsmitteln in der Steuereinrichtung zur Feststellung der für die Freigabe der Zugangseinrichtung erforderlichen Berechtigung mit der in der Steuereinrichtung festgelegten Vorgabeinformation verglichen wird, aus einer nach dem angelernten geheimen Code verschlüsselten Benutzercodeinformation besteht,
(c) die Steuereinrichtung ein weiteres Speichermittel umfaßt, in der die Anzahl der von der Steuereinrichtung angelernten Schlüsseleinrichtungen gespeichert ist
(d) und die Schlüsseleinrichtungen weitere Speichermittel umfassen, in die der aktuelle Speicherwert des weiteres Speichermittel in der Steuereinrichtung bei jedem Kontakt zwischen der jeweiligen Schlüsseleinrichtung und der Steuereinrichtung übernommen wird.

Mit den Mitteln der Erfindung kann festgestellt werden, wieviele Schlüsseleinrichtungen von derselben Steuereinrichtung angelernt worden sind. Der Zahlenwert dieses im Fahrzeug vorhandenen Speichers wird bei jedem Schlüsselkontakt in den weiteren im jeweiligen Schlüssel vorhandenen Speicher eingelesen, so daß mindestens einer der "rechtmäßigen" Schlüsseleinrichtungen den aktuellen Wert entsprechend der Anzahl der angelernten Schlüssel übergeben worden sind oder nicht. Im letztgenannten Fall besteht dann Verdacht auf Versicherungsbetrug.

Bevorzugte Ausführungsformen der Erfindung gehen aus den Unteransprüchen hervor. Dabei ist insbesondere von Vorteil, wenn der Speicher in der Steuereinrichtung ein Nur-Aufwärts-Zähler ist, der bei jedem Zählimpuls um einen Zählwert hochgesetzt wird, so daß die Manipulation des Speichers für sich betrachtet ausgeschlossen ist. Für den Fall, daß dem Zähler ein zusätzlicher Impuls auferlegt wird, der dem Ziel dient, seinen Wert herabzusetzen, um einen zusätzlich angelernten Schlüssel zu verschleiern, erfolgt nach dieser Variante der Erfindung dennoch ein zwangsweises Hochsetzen des Zählers auch durch den zusätzlichen Impuls. Die dem weiteren Speicher entnehmbare Anzahl ist somit immer mindestens gleich der insgesamt angelernten Schlüssel, so daß in jedem Fall erkannt werden kann, ob mehr als die übergebenen Schlüssel angelernt worden sind.

Eine weitere bevorzugte Ausführungsform sieht vor, daß sowohl der Steuereinrichtung als auch den jeweiligen Schlüsseleinrichtungen PIN-Codes vorgebbar sind, derart, daß ein Setzen des weiteren Speichermittels in der Steuereinrichtung jeweils nur bei Übereinstimmung des in die Schlüsseleinrichtung eingegebenen PIN-Codes mit dem in der Steuereinrichtung abgelegten PIN-Code möglich ist.

Dies bedeutet eine zusätzliche Verbesserung der Sicherheit, da nur dann ein Anlernvorgang des Schlüssels überhaupt stattfinden kann, wenn der für die Steuereinrichtung relevante PIN-Code in den Schlüssel eingegeben wird. Durch diese Maßnahme wird also der Vorgang des Anlernens des Schlüssels selbst bereits erschwert.

Im folgenden wird anhand einer Zeichnung die Erfindung für ein Ausführungsbeispiel näher erläutert:

Mit A ist eine Steuereinrichtung bezeichnet, welche sich ortsfest und dauerenergieversorgt im Fahrzeug befindet. Der Steuereinrichtung A zugeordnet sind drei Schlüsseleinrichtungen B1,B2,B3, die bei der Übergabe des Fahrzeugs dem Eigentümer ausgehändigt werden. Gestrichelt dargestellt ist ein vierter Schlüssel B4, dessen Bedeutung nachfolgend näher erläutert wird.

Die den rechtmäßigen Fahrzeugbenutzer übergebenen Schlüssel B1 bis B3 sind zunächst noch "neutral". Vor der erstmaligen Benutzung eines jeden Schlüssels B1,B2,B3 muß dieser an die Steuereinrichtung A "angelernt" werden. Dies bedeutet, daß ein geheimer Code, der in der Steuereinrichtung A vorhanden ist, auf den Schlüssel B1 bis B3 übertragen wird, so daß dieser dann entsprechend dem geheimen Code verschlüsselte Benutzerinformationen an die Steuereinrichtung aussendet, die diesen Schlüssel als authorisiert erkennen läßt. Das Anlernen des Schlüssels, B1,B2,B3 erfolgt dadurch, daß zunächst in den jeweiligen Schlüssel ein sog. PIN-Code eingegeben wird, welcher mit dem PIN-Code in der Steuereinrichtung A übereinstimmt. Anschließend wird durch Kontakt zwischen Schlüssel B1 bis B3 und Steuereinrichtung A der geheime Code übertragen, so daß der bzw. die Schlüssel angelernt ist bzw. sind.

Die erfindungsgemäße Vorrichtung weist nun in der Steuereinrichtung A einen weiteren Speicher M auf, in dem jedesmal dann, wenn ein Schlüssel B1,B2,B3 angelernt wird, dessen Zahlenwert hochgesetzt wird. Gleichzeitig weisen die Schlüssel B1 bis B3 ebenfalls weitere Speichermittel M1,M2, M3 auf, die jedesmal dann, wenn der jeweilige Schlüssel mit der Steuereinrichtung in Kontakt kommt, an den jeweiligen im weiteren Speicher M vorhandenen Speicherwert angepaßt werden.

Wird beispielsweise zunächst nur Schlüssel B1 angelernt, verbleiben die Schlüssel B2,B3 in der neutralen Funktion und der Wert des weiteren Speichers M der Steuereinrichtung A ist gleich 1. Für jeden weiter angelernten Schlüssel steigt der Speicherwert im Speicher M um 1. Wird beispielsweise der Schlüssel B1 längere Zeit nicht benutzt und während dieser Zeit die Schlüssel B2 und B3 angelernt, so wird beim nachherigen Benutzen des Schlüssels B1 der weitere Speicher M1 im Schlüssel B1 auf den Wert 3 hochgesetzt, sobald die Schlüssel B1 wieder mit der Steuereinrichtung A in Kontakt kommt. Somit kann immer mindestens an einem der Schlüssel B1 bis B3 der aktuelle Status der Anzahl der angelernten Schlüssel erkannt werden.

Erfolgt beispielsweise im Laufe der Zeit das Anlernen eines weiteren Schlüssels B4 (gestrichelt dargestellt), so wird im weiteren Speicher M der Steuereinrichtung A der Wert auf 4 hochgesetzt und auch entsprechend beim nachherigen Kontakt eines der Schlüssel B1 bis B3 deren Speicher M1,M2,M3 auf den Wert 4 erhöht.

Wird anschließend das Fahrzeug als gestohlen gemeldet, wobei der Schlüssel B4 dem Dieb zur Benutzung des Fahrzeuges verbleibt, kann anhand der Speicherwerte der weiteren Speicher M1,M2,M3 des der Versicherung übergebenen Schlüsselsatzes bestehend aus den Schlüssel B1 bis B3 erkannt werden, daß noch ein weiterer Schlüssel angelernt worden ist.

Hierdurch kann erkannt werden, daß der Fahrzeugdiebstahl nur vorgetäuscht ist.

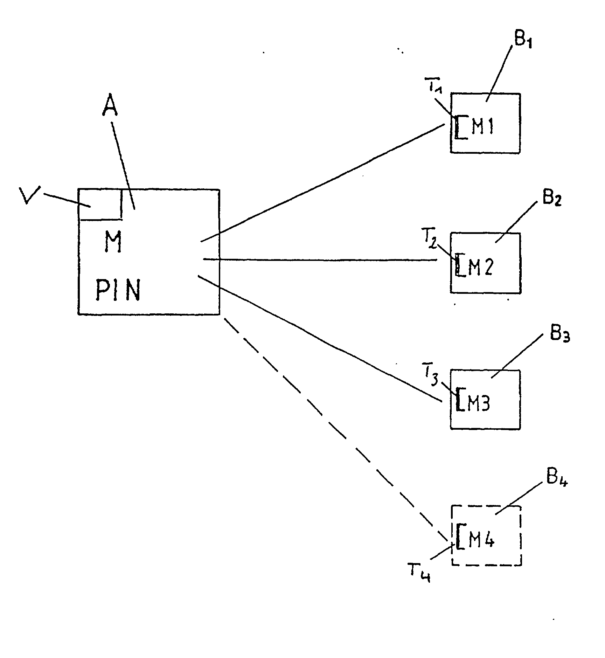

## Patentansprüche

1. Vorrichtung zur Prüfung der Nutzungsberechtigung für Zugangskontrolleinrichtungen, insbesondere Schließeinrichtungen für Fahrzeuge, mit:
- einer zugangsseitigen Steuereinrichtung (A) mit einem Speichermittel für einen geheimen Code,
- einer Anzahl von benutzerseitigen Schlüsseleinrichtungen (B1...Bn), die jeweils einen Transponder (T1...Tn) enthalten, in dem der für die jeweilige Schlüsseleinrichtung (B1...Bn) maßgebliche geheime Code niedergelegt ist und
- Vergleichsmitteln (V) in der Steuereinrichtung (A) zur Feststellung der für die Freigabe der Zugangseinrichtung erforderlichen Berechtigung, derart, daß die vom jeweiligen Transponder (T1...Tn) ausgesandten Informationen jeweils mit einer in der Steuereinrichtung durch den geheimen Code festgelegten Vorgabeinformation verglichen werden,
**dadurch gekennzeichnet,**
(a) daß der für die jeweilige Schlüsseleinrichtung (B1...Bn) maßgebliche geheime Code durch Anlernen von der Steuereinrichtung (A) niedergelegt ist,
(b) daß die vom jeweiligen Transponder (T1...Tn) ausgesandte Information, die von dem Vergleichsmitteln (V) in der Steuereinrichtung (A) zur Feststellung der für die Freigabe der Zugangseinrichtung erforderlichen Berechtigung mit der in der Steuereinrichtung (A) festgelegten Vorgabeinformation verglichen wird, aus einer nach dem angelernten geheimen Code verschlüsselten Benutzercodeinformation besteht,
(c) daß die Steuereinrichtung (A) ein weiteres Speichermittel (M) umfaßt, in der die Anzahl der von der Steuereinrichtung (A) angelernten Schlüsseleinrichtungen (B1...Bn) gespeichert ist
(d) und daß die Schlüsseleinrichtungen (B1...Bn) weitere Speichermittel (M1...Mn) umfassen, in die der aktuelle Speicherwert des weiteres Speichermittel (M) in der Steuereinrichtung (A) bei jedem Kontakt zwischen der jeweiligen Schlüsseleinrichtung (B1...Bn) und der Steuereinrichtung (A) übernommen wird.

2. Vorrichtung nach Anspruch 1,
**dadurch gekennzeichnet,daß das** weitere Speichermittel (M) in der Steuereinrichtung (A) zum Feststellen der Anzahl der von der Steuereinrichtung (A) angelernten Schlüsseleinrichtungen (B1...Bn) ein Nur-Aufwärts-Zähler ist.

3. Vorrichtung nach einem der vorhergehenden Ansprüche,
**dadurch gekennzeichnet,daß** der Steuereinrichtung (A) und den Schlüsseleinrichtungen (B1...Bn) jeweils PIN-Codes vorgebbar sind derart, daß ein Setzen des weiteren Speichermittels (M) in der Steuereinrichtung (A) jeweils nur bei Übereinstimmung des in die Schlüsseleinrichtung (B1...Bn) eingegebenen PIN-Codes mit dem in der Steuereinrichtung (A) abgelegten PIN-Code möglich ist.

4. Vorrichtung nach einem der vorhergehenden Ansprüche,
**dadurch gekennzeichnet,daß** die Kopplung zwischen der Steuereinrichtung (A) und einer der Schlüsseleinrichtungen (B1...Bn) galvanisch, insbesondere in Form einer Chipkarte, erfolgt.

5. Vorrichtung nach einem der vorhergehenden Ansprüche,
**dadurch gekennzeichnet,daß** die Kopplung zwischen der Steuereinrichtung (A) und einer der Schlüsseleinrichtungen (B1...Bn) kapazitiv und/oder induktiv erfolgt.

6. Vorrichtung nach einem der vorhergehenden Ansprüche,
**dadurch gekennzeichnet,daß** für alle Schlüsseleinrichtungen (B₁...Bₙ) übereinstimmende geheime Codes vorliegen.

## Claims

1. Device for testing user authorisation for access control devices, in particular locking devices for vehicles, with
- a control device (A) on the access side with a memory means for a secret code,
- a number of key devices (B1 ... Bn) on the user side, in each case containing a transponder (T1 ... Tn), in which the relevant secret code for the respective key device (B1... Bn) is deposited and
- means of comparison (V) in the control device (A) for establishing the authorisation required for release of the access device in such a way that the informations transmitted by the respective transponder (T1 ... Tn) are in each case compared with a standard information prescribed in the control device by the secret code,
**characterised in that**
(a) the relevant secret code for the respective key device (B1 ... Bn) is deposited through learning by the control device (A),
(b) the information transmitted by the respective transponder (T1 ... Tn), which is compared by the means of comparison (V) in the control device (A) to establish the authorisation required for release of the access device with the standard information prescribed in the control device (A), consists of a user code information encoded according to the learned secret code,
(c) the control device (A) comprises a further memory means (M), in which the number of key devices (B1 ... Bn) learned by the control device (A) is stored
(d) and the key devices (B1 ... Bn) comprise further memory means (M1 ... Mn) into which the current memory value of the further memory means (M) in the control device (A) is accepted on each contact between the respective key device (B1 ... Bn) and the control device (A).

2. Device according to Claim 1, **characterised in that** the further memory means (M) in the control device (A) for establishing the number of key devices (B1 ... Bn) learned by the control device (A) is an only-upwards counter.

3. Device according to one of the preceding claims, **characterised in that** PIN codes are predeterminable in each case for the control device (A) and the key devices (B1 ... Bn), in such a way that setting of the further memory means (M) in the control device (A) is possible in each case only if the PIN code entered in the key device (B1 ... Bn) matches the PIN code deposited in the control device (A).

4. Device according to one of the preceding claims, **characterised in that** the coupling between the control device (A) and one of the key devices (B1 ... Bn) takes place by electroplating, in particular in the form of a chip card.

5. Device according to one of the preceding claims, **characterised in that** the coupling between the control device (A) and one of the key devices (B1 ... Bn) takes place capacitively and/or inductively.

6. Device according to one of the preceding claims, **characterised in that** there are matching secret codes for all the key devices (B1 ... Bn).

## Revendications

1. Dispositif de contrôle de l'autorisation d'utilisation, destiné à des unités de contrôle d'accès, en particulier des unités de verrouillage dans des véhicules automobiles, comprenant :
- une unité de commande (A) du côté de l'accès munie d'un moyen de mémorisation destiné à recevoir un code secret,
- un nombre d'unités de verrouillage (B1...Bn) du côté de l'utilisateur, qui comportent chacune un transpondeur (T1...Tn), dans lequel est stocké le code secret déterminant pour chaque unité de verrouillage (B1...Bn), et
- des moyens de comparaison (V) dans l'unité de commande (A), destinés à détecter l'autorisation nécessaire pour débloquer le système d'accès, de manière telle que les informations émises par chaque transpondeur (T1...Tn) sont comparées chacune à une information de référence définie par le code secret dans l'unité de commande,
caractérisé
(a) en ce que le code secret déterminant pour chaque unité de verrouillage (B1...Bn) est mémorisé par un processus d'initiation de l'unité de commande (A),
(b) en ce que l'information émise par chaque transpondeur (T1...Tn), laquelle est comparée à l'information de référence, définie dans l'unité de commande, par les moyens de comparaison (V) dans l'unité de commande (A), pour détecter l'autorisation nécessaire pour débloquer le système d'accès, est formée par une information relative au code utïlisateur et cryptée selon le code secret appris,
(c) en ce que l'unité de commande (A) comporte un moyen de mémorisation supplémentaire (M) dans lequel est stocké le nombre des unités de verrouillage (B1...Bn) apprises par l'unité de commande (A),
(d) et en ce que les unités de verrouillage (B1...Bn) comportent des moyens de mémorisation supplémentaires (M1...Mn), dans lesquels est transmise la valeur actuelle stockée dans le moyen de mémorisation supplémentaire (M) de l'unité de commande (A) à chaque contact entre l'unité de verrouillage (B1...Bn) concernée et l'unité de commande (A).

2. Dispositif selon la revendication 1, **caractérisé en ce que** le moyen de mémorisation supplémentaire (M) dans l'unité de commande (A), destiné à détecter le nombre des unités de verrouillage (B1...Bn) apprises par l'unité de commande (A), est un compteur en sens ascendant exclusif.

3. Dispositif selon l'une des revendications précédentes, **caractérisé en ce que** des codes PIN peuvent être prédéfinis pour l'unité de commande (A) et chacune des unités de verrouillage (B1...Bn), de telle sorte que le moyen de commande supplémentaire (M) dans l'unité de commande (A) peut être activé uniquement si le code PIN entré dans l'unité de verrouillage (B1...Bn) coïncide avec le code PIN stocké dans l'unité de commande (A).

4. Dispositif selon l'une des revendications précédentes, **caractérisé en ce que** le couplage entre l'unité de commande (A) et l'une des unités de verrouillage (B1...Bn) est un couplage galvanique, en particulier sous forme d'une carte à puce.

5. Dispositif selon l'une des revendications précédentes, **caractérisé en ce que** le couplage entre l'unité de commande (A) et l'une des unités de verrouillage (B1...Bn) est un couplage capacitif et/ou inductif.

6. Dispositif selon l'une des revendications précédentes, **caractérisé en ce que** des codes secrets coïncidents sont disponibles pour toutes les unités de verrouillage (B1...Bn).
